# EUROPEAN PATENT SPECIFICATION

(11) **EP 2 478 684 B1**
(45) Date of publication and mention of the grant of the patent: **07.11.2018**
(21) Application number: 10762595.6
(22) Date of filing: 16.09.2010
(51) Int. Cl.: H04L 29/06, H04L 29/12

(54) **METHOD FOR SUPPORTING A USER EQUIPMENT LACKING GLOBALLY ROUTABLE USER AGENT URI - GRUU SUPPORT IN AN INTERNET PROTOCOL MULTIMEDIA SUBSYSTEM - IMS.**
VERFAHREN ZUR UNTERSTÜTZUNG EINES BENUTZERGERÄTS OHNE GLOBALLY ROUTABLE USER AGENT URI - GRUU IN EINEM INTERNET PROTOCOL MULTIMEDIA SUBSYSTEM - IMS
PROCÉDÉ DE SUPPORT D' UN ÉQUIPEMENT UTILISATEUR MANQUANT UN GLOBALLY ROUTABLE USER AGENT URI - GRUU DANS UN INTERNET PROTOCOL MULTIMEDIA SUBSYSTEM - IMS.

(30) Priority: 18.09.2009 EP 09011913; 18.09.2009 US 243748 P
(43) Date of publication of application: 25.07.2012
(73) Proprietor: Deutsche Telekom AG, 53113 Bonn (DE)
(72) Inventor: KLEIN, Andreas, 53225 Bonn (DE)
(74) Representative: Schwöbel, Thilo K.
(86) International application number: PCT/EP2010/005695
(87) International publication number: WO 2011/032701

(56) References cited:
- EP-A1- 1 981 246
- WO-A1-2009/095074
- ROSENBERG CISCO J: "Obtaining and Using Globally Routable User Agent (UA) URIs (GRUU) in the Session Initiation Protocol (SIP); draft-ietf-sip-gruu-15.txt" OBTAINING AND USING GLOBALLY ROUTABLE USER AGENT (UA) URIS (GRUU) IN THE SESSION INITIATION PROTOCOL (SIP); DRAFT-IETF-SIP-GRUU-15.TXT, INTERNET ENGINEERING TASK FORCE, IETF; STANDARDWORKINGDRAFT, INTERNET SOCIETY (ISOC) 4, RUE DES FALAISES CH- 1205, vol. sip, no. 15, 11 October 2007 (2007-10-11), XP015058968

## Description

### BACKGROUND

The present invention relates a core network for supporting a User Equipment (UE) lacking Globally Routable User Agent URI (GRUU) support in an Internet Protocol Multimedia Subsystem (IMS) of a communication network, wherein the Core Network comprises an interworking entity. The present invention further relates to a method for supporting a User Equipment (UE) lacking Globally Routable User Agent URI (GRUU) support in an Internet Protocol Multimedia Subsystem (IMS) of a communication network. The invention further relates to an interworking entity providing a Call State Control Function for supporting a User Equipment (UE) lacking Globally Routable User Agent URI (GRUU) support in an Internet Protocol Multimedia Subsystem (IMS) of a communication network, and a program comprising a computer readable program code.

Communication networks according to the standard of the Internet Protocol Multimedia Subsystem (IMS) are generally known. Several applications of the Session Initiation Protocol (SIP) require a user agent to construct and distribute a Uniform Resource Identifier (URI) that can be used by anyone on the internet to route a call to that specific user agent instance (or User Equipment (UE)). A Uniform Resource Identifier (URI) that routes to a specific user agent instance (or User Equipment (UE)) is called a Globally Routable User Agent URI (GRUU). In the Session Initiation Protocol (SIP), RFC 3261, the basic unit of reference is the Address-Of-Record (AOR).

However, in Session Initiation Protocol (SIP) systems, a single user can have a number of a user agents (handsets, softphones, voicemail accounts, etc.) which are all referenced by the same Address-Of-Record (AOR). As the addressing is based on public user ids, a request sent to a public user id will be forked if several clients (user agents or User Equipment (UE) devices) are registered with this public user id at the same time. There are a number of contexts in which it is desirable to have an identifier which addresses a single user agent rather than the group of user agents indicated by an Address-Of-Record (AOR). An example of such a situation is SMS (Short Message Service) over IP (Internet Protocol) which has to communicate directly to dedicated subscribers.

Many current clients attempt to meet the need for an instance-specific identifier by using explicit IP addresses in the values they provide in the Contact header field. However, this interacts poorly with NATs and firewalls, and as a practical matter these Uniform Resource Identifiers (URIs) cannot be used by arbitrary external clients. Similarly, usage of hostnames has proven problematic for similar reasons. In addition, many Session Initiation Protocol (SIP) clients do not have or cannot obtain a hostname for themselves at all. It is therefore useful to provide a unique user-agent (or User Equipment (UE)) identifier which is still globally routable such as a Globally Routable User Agent URI (GRUU), as described, e.g., in European Patent Application EP 1 981 246 A1. Further related methods can be found in WO 2009/095074 A1 and XP015058968.

A drawback of the known art is that a User Equipment (UE) which does not support Globally Routable User Agent URI (GRUU) cannot be integrated in such a Session Initiation Protocol (SIP) system as addressing based on Globally Routable User Agent URI (GRUU) works only if the use of Globally Routable User Agent URI (GRUU) is supported by the User Equipment (UE). Generally, for a given User Equipment (UE) device, it is not possible to take Globally Routable User Agent URI (GRUU) support for granted.

### SUMMARY

An object of the present invention is to provide a core network for supporting a User Equipment (UE) lacking Globally Routable User Agent URI (GRUU) support in an Internet Protocol Multimedia Subsystem (IMS) of a communication network.

The object of the present invention is achieved by a Core Network according to claim 1.

According to the present invention, it is thereby advantageously possible that also User Equipment (UE) devices that do not support Globally Routable User Agent URI (GRUU) functionality can be used within a Session Initiation Protocol (SIP) network. This is advantageously possible within the context of the present invention by means of providing a binding between
- a Globally Routable User Agent URI (GRUU),
- a public user id (SIP URI), and
- an International Mobile Subscriber Identity (IMSI).
to enable a arbitrary entity or node of the communication network, e.g. an Application Server (AS) according to the Session Initiation Protocol (SIP), to easily address specific subscribers (and especially specific User Equipment (UE) of specific subscribers). According to the present invention, it is very much preferred that the User Equipment (UE) is a Internet Protocol Multimedia Subsystem (IMS) enabled User Equipment (UE). This means that such a preferred User Equipment (UE) does not need to be supported by the interworking function with regard to Internet Protocol Multimedia Subsystem (IMS) functionality as such but only with regard to Globally Routable User Agent URI (GRUU) functionality.

For the binding between the Globally Routable User Agent URI (GRUU), the public user id (SIP Uniform Resource Identifier (URI)), and the International Mobile Subscriber Identity (IMSI), it is preferred that the User Equipment (UE) is both Internet Protocol Multimedia Subsystem (IMS) enabled and Global System of Mobile communication (GSM) enabled.

For the case of the second message, the second message is preferably modified such that the Globally Routable User Agent URI (GRUU)-related data are removed and replaced by an initially registered public user id (especially a Session Initiation Protocol (SIP) Uniform Resource Identifier (URI)).

In the context of the present invention, the Globally Routable User Agent URI (GRUU) related data is preferably a Globally Routable User Agent URI (GRUU) related header field. This means that the first messages are preferably modified in that a Globally Routable User Agent URI (GRUU) related header field is added to the messages and that the second messages are preferably modified in that a Globally Routable User Agent URI (GRUU) related header field is removed from the messages.

According to the present invention, it is advantageously possible that the interworking entity is a Proxy-Call State Control Function (P-CSCF) entity or a Serving-Call State Control Function (S-CSCF) entity or a Session Border Controller (SBC).

Thereby, it is advantageously possible according to the present invention that the entity providing the interworking functionality is located as closely as possible to the User Equipment (UE) and that for all or at least for virtually all other nodes of the Internet Protocol Multimedia Subsystem (IMS) communication network, such a User Equipment (UE) [lacking Globally Routable User Agent URI (GRUU) support] can be addressed in a transparent manner as if this User Equipment (UE) had Globally Routable User Agent URI (GRUU) support. According to the present invention, it is preferred to use the Proxy-Call State Control Function (P-CSCF) as interworking entity because the User Equipment (UE) usually directly contacts (or registers) the Proxy-Call State Control Function (P-CSCF) entity. But also the Serving-Call State Control Function (S-CSCF) can detect that the User Equipment (UE) does not support Globally Routable User Agent URI (GRUU) functionality and start a simulation of procedure.

From a point of view of the User Equipment (UE) or of Session Initiation Protocol (SIP) Application Server (AS), there is no difference if this functionality is implemented by the Proxy-Call State Control Function (P-CSCF) or the Serving-Call State Control Function (S-CSCF) or in the Session Border Controller (SBC). Session Border Controllers (SBC) usually sit between two service provider networks in a peering environment, or between an access network and a backbone network to provide service to residential and/or enterprise customers. The Session Border Controller (SBC) may be hosted in the access network (e.g., this is common when the access network is an enterprise network), or in the operator network (e.g., this is common when the access network is a residential or small business network).

According to the present invention, the simulation of the Globally Routable User Agent URI (GRUU) functionality is completely transparent for the Serving-Call State Control Function (S-CSCF) entity and the Application Server (AS). The interworking entity (e.g. the Proxy-Call State Control Function (P-CSCF)) ensures that in all Mobile Originating procedures (or the relating first Session Initiation Protocol (SIP) messages), the Session Initiation Protocol (SIP) Uniform Resource Identifier (URI) in the "FROM" Header is replaced by either the temporary or public Globally Routable User Agent URI (GRUU). Likewise, the interworking entity (e.g. the Proxy-Call State Control Function (P-CSCF)) ensures that in all Mobile Terminating procedures (or the relating second Session Initiation Protocol (SIP) messages), the temporary or public Globally Routable User Agent URI (GRUU) is replaced by the initially registered Session Initiation Protocol (SIP) Uniform Resource Identifier (URI) in the "TO" Header.

```
 For User Equipment (UE) devices that support Globally Routable User Agent URI
 (GRUU), the User Equipment (UE) adds a
        "+sip.instance"
        parameter containing an instance ID into the contact header of the Session Initiation
        Protocol (SIP) Register request and the option-tag
        "gruu"
        in the Supported header in order to obtain a temporary and public Globally Routable
        User Agent URI (GRUU) from the network. This Session Initiation Protocol (SIP)
        Register request is sent to the Proxy-Call State Control Function (P-CSCF). The
        Proxy-Call State Control Function (P-CSCF) checks if the request comprises a
        "+sip.instance"
        parameter and the option-tag
        "gruu"
        in the Supported header. The result of this check is positive if the User Equipment
        (UE) supports Globally Routable User Agent URI (GRUU) functionality.
```

If - on the other hand - the User Equipment (UE) does not support Globally Routable User Agent URI (GRUU) functionality then the Proxy-Call State Control Function (P-CSCF) has to simulate (or emulate) Globally Routable User Agent URI (GRUU) support of the User Equipment (UE) by adding a

```
        "+sip.instance"
        parameter with an arbitrary value into the Contact header of the Session Initiation
        Protocol (SIP) Register request and the option-tag "gruu" in the Supported header.
        The simulation of the Globally Routable User Agent URI (GRUU) support means that
        the Proxy-Call State Control Function (P-CSCF) has to modify all Session Initiation
        Protocol (SIP) Requests (and other Session Initiation Protocol (SIP) messages)
        towards the Interrogating-Call State Control Function (I-CSCF) entity and towards the
        Serving-Call State Control Function (S-CSCF) entity (via the Mw-Interface) (or
        towards other nodes of the communication network) as if the User Equipment (UE)
        supported Globally Routable User Agent URI (GRUU). In the context of the present
        invention, such messages are also called first Session Initiation Protocol (SIP)
        messages or first messages.
```

The Serving-Call State Control Function (S-CSCF) receives the Session Initiation Protocol (SIP) Register request with the
"+sip.instance"
parameter (i.e. the modified first message) and the option-tag "gruu" in the Supported header and therefore constructs a temporary and public Globally Routable User Agent URI (GRUU). The Serving-Call State Control Function (S-CSCF) binds to the registered public user id, the temporary Globally Routable User Agent URI (GRUU), the public Globally Routable User Agent URI (GRUU) and the International Mobile Subscriber Identity (IMSI). Furthermore, the Serving-Call State Control Function (S-CSCF) sends a third Party Register with the registered public user id to all Application Server (AS) to inform about the registration. By subscribing to the Registration Event Package at the Serving-Call State Control Function (S-CSCF) for such a public user id, the Session Initiation Protocol (SIP) Application Server (AS) will receive the binding between public user id, the temporary Globally Routable User Agent URI (GRUU), the public Globally Routable User Agent URI (GRUU) and the International Mobile Subscriber Identity (IMSI). The logical link of the public user id, the temporary Globally Routable User Agent URI (GRUU), the public Globally Routable User Agent URI (GRUU) and the International Mobile Subscriber Identity (IMSI) enables the Session Initiation Protocol (SIP) Application Server (AS) to communicated directly with a subscriber, even if the Session Initiation Protocol (SIP) Application Server (AS) has only an International Mobile Subscriber Identity (IMSI) as unique identifier, which is not routable in Internet Protocol Multimedia Subsystem (IMS). The Session Initiation Protocol (SIP) Application Server (AS) can map the International Mobile Subscriber Identity (IMSI) to a Globally Routable User Agent URI (GRUU) and use then the Globally Routable User Agent URI (GRUU) for direct communication with a dedicated subscriber (or User Equipment (UE)) in the Internet Protocol Multimedia Subsystem (IMS). Using only the public user id would not be sufficient because the public user ids can be shared and registered by several User Equipments (UEs).

On the other hand (and still in case the User Equipment (UE) does not support Globally Routable User Agent URI (GRUU) functionality), the Proxy-Call State Control Function (P-CSCF) has to remove Globally Routable User Agent URI (GRUU) related data and replace Globally Routable User Agent URIs (GRUUs) by the User Equipments (UEs) Session Initiation Protocol (SIP) Uniform Resource Identifier (URI) in every Session Initiation Protocol (SIP) message towards the User Equipment (UE) (i.e. via the Gm-Interface). In the context of the present invention, such messages are also called second Session Initiation Protocol (SIP) messages or second messages.

Such a second message to be transported to the User Equipment (UE) (e.g. the 200 Ok message conveyed to the User Equipment (UE) as a result of the initial Register request) comprises the public and temporary Globally Routable User Agent URI (GRUU). In case the interworking entity, e.g. the Proxy-Call State Control Function (P-CSCF), has simulated Globally Routable User Agent URI (GRUU) support, the interworking entity has to remove all Globally Routable User Agent URI (GRUU) related data in this Session Initiation Protocol (SIP) message which results in the modified second Session Initiation Protocol (SIP) message transported to the User Equipment (UE). The interworking entity stores the temporary and public Globally Routable User Agent URI (GRUU).

Application Server (AS) which interwork with GSM services (Global System of Mobile communication) like IP-SM GW (IP Short Message GateWay) have to map an International Mobile Subscriber Identity (IMSI) to an Internet Protocol Multimedia Subsystem (IMS) public user id. The International Mobile Subscriber Identity (IMSI) identifies a particular subscriber but the 3GPP standards do not specify how the International Mobile Subscriber Identity (IMSI) can be mapped to a public user id in Internet Protocol Multimedia Subsystem (IMS), which belongs only to this subscriber. Furthermore, a mapping of International Mobile Subscriber Identity (IMSI) to Session Initiation Protocol (SIP) Uniform Resource Identifier (URI) is not sufficient, because a Session Initiation Protocol (SIP) Uniform Resource Identifier (URI) can be shared by several User Equipments (UEs). According to the present invention and by means of creating a link between a public user id (Session Initiation Protocol (SIP) Uniform Resource Identifier (URI)), Globally Routable User Agent URI (GRUU) and International Mobile Subscriber Identity (IMSI), it is advantageously possibly for the Application Server (AS) to map an International Mobile Subscriber Identity (IMSI) to a Globally Routable User Agent URI (GRUU) for addressing only a dedicated User Equipment (UE) (out of a plurality of User Equipments (UEs) associated with a specific subscriber.

According to the present invention, the Globally Routable User Agent URI (GRUU)-related data comprises a public and a temporary Globally Routable User Agent URI (GRUU).

Thereby, it is advantageously possible according to the present invention that full support for all kinds of Globally Routable User Agent URI (GRUU) identities is possible.

The present invention also relates to a Method according to claim 3.

It is thereby advantageously possible that the use of User Equipments (UEs) without Globally Routable User Agent URI (GRUU) support is possible within an internet Protocol Multimedia Subsystem (IMS) communication network.

The present invention also relates to an Interworking entity providing a Call State Control Function according to claim 5.

Additionally, the present invention relates to a program according to claim 7

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates the Subscriber Registration procedure of a User Equipment (UE) to an Internet Protocol Multimedia Subsystem (IMS) of a communication network.
Figure 2 schematically illustrates the Mobile Terminating procedure of a short message delivery over IP.
Figure 3 schematically illustrates the Mobile Originating procedure of a short message delivery over IP.
Figure 4 schematically illustrates the network configuration of an Internet Protocol Multimedia Subsystem (IMS) of a communication network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In all Figures, the assumption is met that the User Equipment (UE) does not support Globally Routable User Agent URI (GRUU) functionality. This means that the User Equipment (UE) does not send messages to the core network that comprise any Globally Routable User Agent URI (GRUU) header parameters. Accordingly, the User Equipment (UE) is not able to correctly interpret messages received from the core network that contain Globally Routable User Agent URI (GRUU) related parameters and at best ignores such parts of received messages

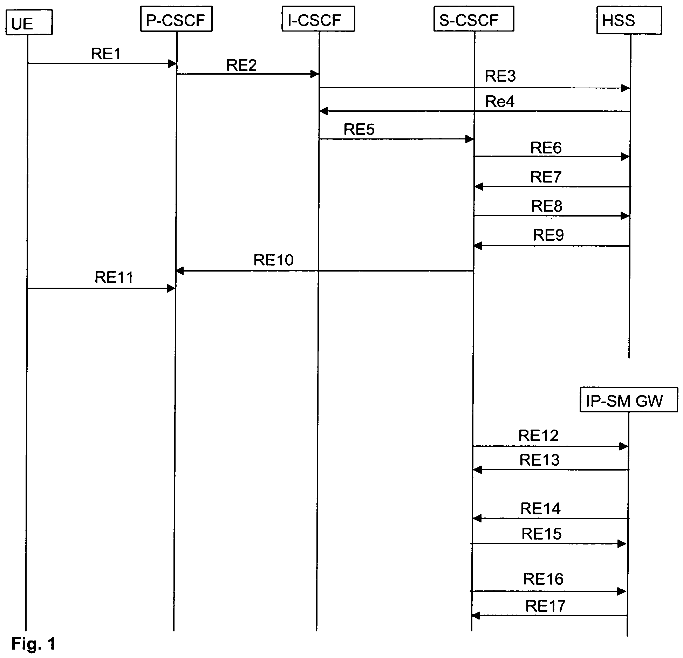

In Figure 1, the Subscriber Registration procedure of a User Equipment (UE) to an Internet Protocol Multimedia Subsystem (IMS) of a communication network is schematically shown by means of illustrating the message exchange between a number of entities of the communication network, namely the User Equipment (UE), a Proxy-Call State Control Function (P-CSCF), an interrogating-Call State Control Function (I-CSCF), a Serving-Call State Control Function (S-CSCF), a Home Subscriber Server (HSS) and an Internet Protocol (IP) Short Message GateWay (IP-SM GW). A first step of the Registration procedure, designated by RE1, corresponds to the User Equipment (UE) sending the initial Session Initiation Protocol (SIP) Register request. The initial Session Initiation Protocol (SIP) Register request corresponds to a message that does not comprise any Globally Routable User Agent URI (GRUU) related parameters or information. In the following, an example of such an initial Session Initiation Protocol (SIP) Register request is given:

```
    REGISTER sip:t-mobile.net SIP/2.0
    ...
    Contact: <sip:491714358392@10.103.2.1>
    Content-Length: 0
```

A second step of the Registration procedure, designated by RE2, corresponds to the Proxy-Call State Control Function (P-CSCF) entity detecting that the User Equipment (UE) does not support Globally Routable User Agent URI (GRUU). For this reason, the Proxy-Call State Control Function (P-CSCF) entity simulates the Globally Routable User Agent URI (GRUU) support by adding a
"+sip.instance"
header and Globally Routable User Agent URI (GRUU) support indication to the Register message. In the following, an example of such a message is given:

```
    REGISTER sip:t-mobile.net SIP/2.0
    ...
    Supported: gruu
    ...
    Contact: <sip:491714358392@10.103.2.1>
     ;+sip.instance="<urn:uuid:f81d4fae-7dec-11d0-a765-00a0c91e6bf6>"
    Content-Length: 0
```

This message RE2 of the second step of the Registration procedure is sent to the Interrogating-Call State Control Function (I-CSCF) entity.

A third, fourth, fifth, sixth, seventh and eighth step of the Registration procedure, designated by RE3, RE4, RE5, RE6, RE7, RE8, correspond to the assignment of a Serving-Call State Control Function (S-CSCF) entity (by the Interrogating-Call State Control Function (I-CSCF) entity). This includes performing of the authentication (e.g. by means of GIBA (GPRS IMS Bundled Authentication) authentication), the assignment of the Serving-Call State Control Function (S-CSCF) entity and the download of the service profile from the Home Subscriber Server (HSS). The third step RE3 corresponds to UAR (User-Authorization-Request). The fourth step RE4 corresponds to UAA (User-Authorization-Answer). The fifth step RE5 corresponds to the Interrogating-Call State Control Function (I-CSCF) assignment by means of a REGISTER message. The sixth step RE6 corresponds to MAR (Multimedia-Auth-Request). The seventh step RE7 corresponds to MAA (Multimedia-Auth-Answer). The eighth step RE8 corresponds to SAR (Server-Assignment-Request). The ninth step RE9 corresponds to SAA (Server-Assignment-Answer).

In a tenth step of the Registration procedure, designated by RE10, the Serving-Call State Control Function (S-CSCF) entity assigns a temporary and a public Globally Routable User Agent URI (GRUU), which is conveyed to the User Equipment (UE) in a 200 Ok message. Despite the fact that the User Equipment (UE) does not support Globally Routable User Agent URI (GRUU) functionality, this assignment of the temporary and public Globally Routable User Agent URI (GRUU) is possible because the Globally Routable User Agent URI (GRUU) support is emulated by the Proxy-Call State Control Function (P-CSCF) entity. In the following, an example of such a 200 Ok and assignment message is given:

```
    SIP/2.0 200 OK
    ...
    Contact: <sip:491714358392@10.103.2.1>
     ;pub-gruu="sip:491714358392@t-mobile.net ;gr=urn:uuid:f81d4fae-7dec-
    11d0-a765-00a0c91e6bf6"
     ;temp-gruu="sip:asdfj93jop24jlv93kl@t-mobile.net;gr"
     ;+sip.instance="<urn:uuid:f81d4fae-7dec-11d0-a765-00a0c91e6bf6>"
    Content-Length: 0
```

An eleventh step of the Registration procedure, designated by RE11, corresponds to the Proxy-Call State Control Function (P-CSCF) entity filtering out all Globally Routable User Agent URI (GRUU) related data and saves the temporary and public Globally Routable User Agent URI (GRUU). The "clean" (i.e. modified) 200 Ok message is forwarded to the User Equipment (UE) and the subscriber is registered. In the following, an example of such a modified 200 Ok message is given:

```
    SIP/2.0 200 OK
    ...
    Contact: <sip:491714358392@10.103.2.1>
    Content-Length: 0
```

A twelfth step of the Registration procedure, designated by RE12, corresponds to the Serving-Call State Control Function (S-CSCF) entity informing the IP-SM GW that a new public user id is registered. This is acknowledged by a thirteenth step of the Registration procedure, designated by RE13, consisting in a 200 Ok message.

A fourteenth step of the Registration procedure, designated by RE14, corresponds to the IP-SM GW subscribing for the Reg Event Package of this public user id. This is acknowledged by a fifteenth step of the Registration procedure, designated by RE15, consisting in a 200 Ok message.

A sixteenth step of the Registration procedure, designated by RE16, corresponds to the Serving-Call State Control Function (S-CSCF) entity sending a Notify message with the Registration Information to the IP-SM GW, which contains the link between public user id (Session Initiation Protocol (SIP) Uniform Resource Identifier (URI)), temporary Globally Routable User Agent URI (GRUU), public Globally Routable User Agent URI (GRUU) and International Mobile Subscriber Identity (IMSI). This is acknowledged by a seventeenth step of the Registration procedure, designated by RE17, consisting in a 200 Ok message. In the following, an example of such a Notify message is given:

```
    Notify
    ...
    Content-Length: ...
    <?xml version="1.0"?>
      <reginfo xmlns="urn:ietf:params:xml:ns:reginfo" version="0" state="full">
       <registration aor="sip:491714358392@t-mobile.net" id="as9"
          state="active">
        <contact id="76" state="active" event="registered">
         <uri>sip:[5555::aaa:bbb:ccc:ddd]</uri>
         <unknown-param name="+sip.instance">
                "<urn:uuid:f81d4fae-7dec-11d0-a765-00a0c91e6bf6>"
         </unknown-param>
         <gr:pub-gruu uri="491714358392@t-mobile.net;gr=hha9s8d-999a"/>
         <gr:temp-gruu uri="sip:asdfj93jop24jlv93kl@t-mobile.net;gr" first-
                cseq="54301"/>
         <IMSI>2620112345678</IMSI>
        </contact>
       </registration>
    </reginfo>
```

In the case the UE subscribes also the Reg Event Package of the registered public user id in the steps above, Proxy-Call State Control Function (P-CSCF) has to filter out all Globally Routable User Agent URI (GRUU) related data in the Session Initiation Protocol (SIP) Notify message.

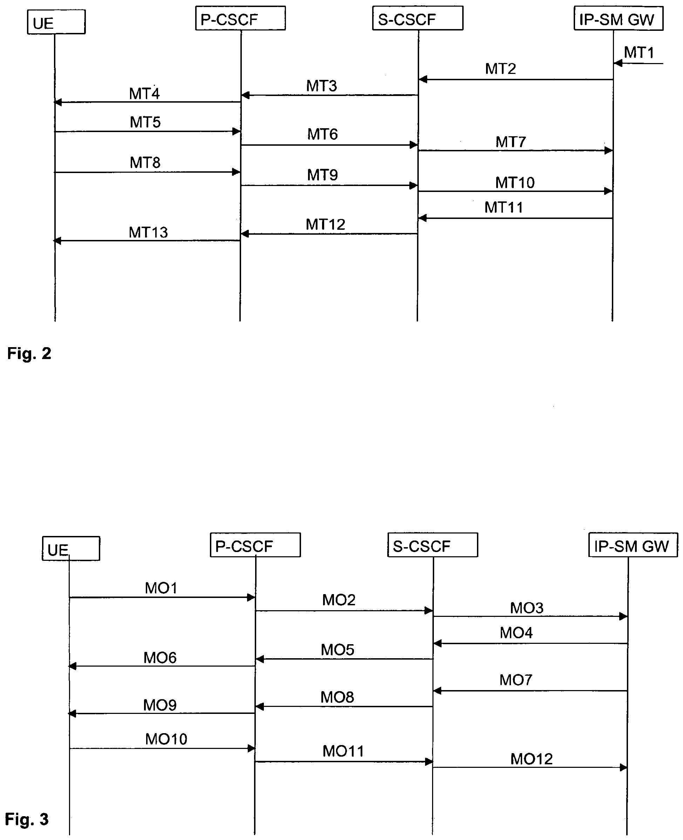

In Figure 2, the Mobile Terminating procedure of a short message delivery over IP is schematically shown by means of illustrating the message exchange between a number of entities of the communication network, namely the User Equipment (UE), a Proxy-Call State Control Function (P-CSCF), a Serving-Call State Control Function (S-CSCF) and an Internet Protocol (IP) Short Message Gateway (IP-SM GW).

A first step of the Mobile Terminating procedure, designated by MT1, corresponds to the IP-SM GW receiving a Short Message and extracts the International Mobile Subscriber Identity (IMSI) from the received message.

A second step of the Mobile Terminating procedure, designated by MT2, corresponds to the IP-SM GW creating a Session Initiation Protocol (SIP) message containing the Short Message and a public Globally Routable User Agent URI (GRUU) as Request Uniform Resource Identifier (URI), which is associated with the received International Mobile Subscriber Identity (IMSI). The IP-SM GW received the association between International Mobile Subscriber Identity (IMSI) and Globally Routable User Agent URI (GRUU) as it subscribed to this user's Reg Event Package before (cf. Figure 1), i.e. the binding between the Globally Routable User Agent URI (GRUU) and the International Mobile Subscriber Identity (IMSI) is used. In the following, an example of such a Session Initiation Protocol (SIP) message is given:

```
    MESSAGE
    ...
    To: <sip:491714358392@t-mobile.net ;gr=urn:uuid:f81d4fae-7dec-11d0-a765-
    00a0c91e6bf6>
    ...
    Content-Type: application/vnd.3gpp.sms
    Content-Length: (...
```

A third step of the Mobile Terminating procedure, designated by MT3, corresponds to the Serving-Call State Control Function (S-CSCF) entity forwarding the message to the Proxy-Call State Control Function (P-CSCF) entity.

A fourth step of the Mobile Terminating procedure, designated by MT4, corresponds to the Proxy-Call State Control Function (P-CSCF) entity replacing the Globally Routable User Agent URI (GRUU) with the Session Initiation Protocol (SIP) Uniform Resource Identifier (URI), which was originally registered by the subscriber. In the following, an example of such a Session Initiation Protocol (SIP) message is given:

```
    MESSAGE
    ...
    To: <sip:491714358392@t-mobile.net>
    ...
    Content-Type: application/vnd.3gpp.sms
    Content-Length: (...)
```

A fifth step of the Mobile Terminating procedure, designated by MT5, corresponds to the User Equipment (UE) acknowledging the Short Message with a 200 Ok message. In the following, an example of such a message is given:

```
    SIP/2.0 200 OK
    ...
    From: <sip:491714358392@t-mobile.net>
    ...
```

A sixth step of the Mobile Terminating procedure, designated by MT6, corresponds to the Proxy-Call State Control Function (P-CSCF) entity replacing the Session Initiation Protocol (SIP) Uniform Resource Identifier (URI) in the "From" Header with the public Globally Routable User Agent URI (GRUU) from the message in the second step MT2 of the Mobile Terminating procedure. In the following, an example of such a modified message is given:

```
    SIP/2.0 200 OK
    ...
    From: <sip:491714358392@t-mobile.net ;gr=urn:uuid:f81d4fae-7dec-11d0-
    a765-00a0c91 e6bf6>
    ...
```

A seventh step of the Mobile Terminating procedure, designated by MT7, corresponds to the forwarding of a 200 Ok message to the IP-SM GW.

An eighth step of the Mobile Terminating procedure, designated by MT8, corresponds to the User Equipment (UE) sending the SMS Delivery Report in a Session Initiation Protocol (SIP) Message to the IP-SM GW. In the following, an example of such a message is given:

```
    MESSAGE
    ...
    From: <sip:491714358392@t-mobile.net>
    ...
    Content-Type: application/vnd.3gpp.sms
    Content-Length: (...)
```

A ninth step of the Mobile Terminating procedure, designated by MT9, corresponds to the Proxy-Call State Control Function (P-CSCF) entity replacing the Session Initiation Protocol (SIP) Uniform Resource Identifier (URI) in the "From" Header with the public Globally Routable User Agent URI (GRUU) corresponding to this User Equipment (UE) (from the message in the second step MT2 of the Mobile Terminating procedure). In the following, an example of such a modified message is given:

```
    MESSAGE
    ...
    From: <sip:491714358392@t-mobile.net;gr=urn:uuid:f81d4fae-7dec-11d0-
    a765-00a0c91 e6bf6>
    ...
    Content-Type: application/vnd.3gpp.sms
    Content-Length: (...)
```

A tenth step of the Mobile Terminating procedure, designated by MT10, corresponds to the forwarding of the Session Initiation Protocol (SIP) message to the IP-SM GW.

An eleventh step of the Mobile Terminating procedure, designated by MT11, corresponds to the answering of the IP-SM GW by means of a 202 Accepted message.

A twelfth step of the Mobile Terminating procedure, designated by MT12, corresponds to the Serving-Call State Control Function (S-CSCF) entity forwarding the 202 Accepted message in a form comprising the Globally Routable User Agent URI (GRUU) related information. In the following, an example of such a message is given:

```
    SIP/2.0 202 Accepted
    ...
    To: <sip:491714358392@t-mobile.net; gr=urn:uuid:f81d4fae-7dec-11d0-
    a765-00a0c91e6bf6>
    ...
```

A thirteenth step of the Mobile Terminating procedure, designated by MT13, corresponds to the Proxy-Call State Control Function (P-CSCF) entity forwarding the 202 Accepted message to the User Equipment (UE). Before this message is forwarded, the Proxy-Call State Control Function (P-CSCF) entity replaces the Globally Routable User Agent URI (GRUU) in the "To" header with the Session Initiation Protocol (SIP) Uniform Resource Identifier (URI) which was originally registered by the subscriber (the User Equipment (UE)). In the following, an example of such a message is given:

```
    SIP/2.0 200 OK
    ...
    To: <sip:491714358392@t-mobile.net>
    ...
```

In Figure 3, the Mobile Originating procedure of a short message delivery over IP is schematically shown by means of illustrating the message exchange between a number of entities of the communication network, namely the User Equipment (UE), a Proxy-Call State Control Function (P-CSCF), a Serving-Call State Control Function (S-CSCF) and an Internet Protocol (IP) Short Message Gateway (IP-SM GW).

A first step of the Mobile Originating procedure, designated by MO1, corresponds to the User Equipment (UE) including the Short Message in the payload of a Session Initiation Protocol (SIP) message directed to the Proxy-Call State Control Function (P-CSCF). In the following, an example of such a Session Initiation Protocol (SIP) message is given:

```
    MESSAGE
    ...
    From: <sip:491714358392@t-mobile.net>
    ...
    Content-Type: application/vnd.3gpp.sms
    Content-Length: (...)
```

A second step of the Mobile Originating procedure, designated by MO2, corresponds to Proxy-Call State Control Function (P-CSCF) replacing the Session Initiation Protocol (SIP) Uniform Resource Identifier (URI) in the "From" header with the public Globally Routable User Agent URI (GRUU) corresponding to the requesting or contacting User Equipment (UE). In the following, an example of such a Session Initiation Protocol (SIP) message is given:

```
    MESSAGE
    ...
    From: <sip:491714358392@t-mobile.net ;gr=urn:uuid:f81d4fae-7dec-11d0-
    a765-00a0c91e6bf6>
    ...
    Content-Type: application/vnd.3gpp.sms
    Content-Length: (...)
```

A third step and a fourth step of the Mobile Originating procedure, designated by MO3 and MO4, correspond to the forwarding of the message by the Serving-Call State Control Function (S-CSCF) entity to the IP-SM GW (third step) and the answering of the IP-SM GW by means of a 202 Accepted message.

A fifth and sixth step of the Mobile Originating procedure, designated by MO5 and MO6, correspond to the Proxy-Call State Control Function (P-CSCF) entity receiving the 202 Accepted message from the Serving-Call State Control Function (S-CSCF) entity and the replacement of the Globally Routable User Agent URI (GRUU) in the "To" header with the Session Initiation Protocol (SIP) Uniform Resource Identifier (URI) which was originally registered by the User Equipment (UE) / the subscriber. In the following, an example of a message received by the Proxy-Call State Control Function (P-CSCF) entity is given:

```
    SIP/2.0 202 Accepted
    ...
    To: <sip:491714358392@t-mobile.net ;gr=urn:uuid:f81d4fae-7dec-11d0-a765-
    00a0c91e6bf6>
    ...
```

In the following, an example of such a modified message is given:

```
    SIP/2.0 200 OK
    ...
    To: <sip:491714358392@t-mobile.net>
    ...
```

After reception of the Short Message by the IP-SM GW, the Short Message is extracted and forwarded to other parts of the core network (e.g. the service center) in order to transmit the Short message to its destination. This can be performed by using the binding between the Globally Routable User Agent URI (GRUU) and the International Mobile Subscriber Identity (IMSI). The IP-SM GW then waits for the delivery report. These steps of the procedure are not explicitly shown in Figure 3. A seventh step of the Mobile Originating procedure, designated by MO7, corresponds to the sending of the SMS-Submit-Report in a Session Initiation Protocol (SIP) message to the User Equipment (UE). In the following, an example of such a message is given:

```
    MESSAGE
    ...
    To: <sip:491714358392@t-mobile.net ;gr=urn:uuid:f81d4fae-7dec-11d0-a765-
    00a0c91e6bf6>
    ...
    Content-Type: application/vnd.3gpp.sms
    Content-Length: (...)
```

An eighth step of the Mobile Originating procedure, designated by MO8, corresponds to the Serving-Call State Control Function (S-CSCF) entity forwarding the Session Initiation Protocol (SIP) message to the Proxy-Call State Control Function (P-CSCF).

A ninth step of the Mobile Originating procedure, designated by MO9, corresponds to the Proxy-Call State Control Function (P-CSCF) entity replacing the Globally Routable User Agent URI (GRUU) in the "To" Header with the Session Initiation Protocol (SIP) Uniform Resource Identifier (URI), which was originally registered by the User Equipment (UE) / subscriber. Then, the modified Session Initiation Protocol (SIP) message is forwarded to the User Equipment (UE). In the following, an example of such a modified message is given:

```
    MESSAGE
    ...
    To: <sip:491714358392@t-mobile.net>
    ...
    Content-Type: application/vnd.3gpp.sms
    Content-Length: (...)
```

A tenth step of the Mobile Originating procedure, designated by MO10, corresponds to acknowledging of the User Equipment (UE) of the Session Initiation Protocol (SIP) message with a 200 Ok message. In the following, an example of such a message is given:

```
    SIP/2.0 200 OK
    ...
    From: <sip:491714358392@t-mobile.net>
    ...
```

An eleventh step of the Mobile Originating procedure, designated by MO11, corresponds to transmitting the answer from the Proxy-Call State Control Function (P-CSCF) entity to the Serving-Call State Control Function (S-CSCF) entity and prior of this transmission the replacement of the Session Initiation Protocol (SIP) Uniform Resource Identifier (URI) in the "From" header with the public Globally Routable User Agent URI (GRUU) from the tenth step of the Register procedure (RE10, cf. Figure 1). In the following, an example of such a message is given:

```
    SIP/2.0 200 OK
    ...
    From: <sip:491714358392@t-mobile.net;gr=urn:uuid:f81d4fae-7dec-11d0-
    a765-00a0c91 e6bf6>
    ...
```

A twelfth step of the Mobile Originating procedure, designated by MO12, corresponds to the Serving-Call State Control Function (S-CSCF) entity forwarding the 200 Ok message in a form comprising the Globally Routable User Agent URI (GRUU) related information to the IP-SM GW.

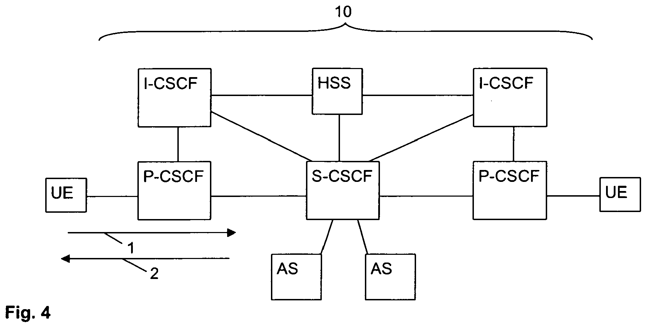

Figure 4 schematically illustrates the network configuration of a core network 10 providing the functionality of the Internet Protocol Multimedia Subsystem (IMS) in a communication network. Two User Equipment (UE) devices are illustrated in Figure 4. The two User Equipment (UE) devices represent a plurality of User Equipment (UE) devices that contact the network, i.e. that are related to arbitrary subscribers.

The core network 10 comprises a Proxy-Call State Control Function (P-CSCF) entity related to each of the User Equipment devices (UEs). Furthermore, the core network 10 comprises a Serving-Call State Control Function (S-CSCF) serving both UEs. Furthermore, the core network 10 comprises an Interrogating-Call State Control Function (I-CSCF) entity associated to each Proxy-Call State Control Function (P-CSCF) entity. The Interrogating-Call State Control Function (I-CSCF) entities are linked to a Home Subscriber Server (HSS), to one of the Proxy-Call State Control Function (P-CSCF) entities and to the Serving-Call State Control Function (S-CSCF) entity and the Serving-Call State Control Function (S-CSCF) entity is linked to one or more Application Server (AS) and the HSS, respectively.

In the examples explained with respect to Figures 1 to 3, the registration procedure and the Mobile Terminating and Mobile Originating procedure of a Short Message transmission over IP are illustrated for the case that at least one of the User Equipment devices (UEs) do not have Globally Routable User Agent URI (GRUU) support.

According to the present invention, a translation or modification of first messages 1 originating from the User Equipment (UE) and directed to an entity of the core network 10 is performed. This translation or modification of the first messages is done by replacing a first identification information (the Session Initiation Protocol (SIP) Uniform Resource Identifier (URI)) by a second identification information (the Globally Routable User Agent URI (GRUU)) resulting in a modified first message 1.

Furthermore according to the present invention, a translation or modification of second messages 2 directed to the User Equipment (UE) and originating at an entity of the core network 10 is performed. This translation or modification of the second messages 2 is done
- either by replacing the second identification information (the Globally Routable User Agent URI (GRUU)) by the first identification information (the Session Initiation Protocol (SIP) Uniform Resource Identifier (URI)),
- or by deleting Globally Routable User Agent URI (GRUU) related data resulting in a modified second message 2.

According to the present invention, this translation and replacement can either be made within the Proxy-Call State Control Function (P-CSCF) entity or within the Serving-Call State Control Function (S-CSCF) entity. Only the case of the translation and replacement within the Proxy-Call State Control Function (P-CSCF) is illustrated in the Figures and explained.

According to the present invention, third messages can be exchanged within the core network 10 and/or between an entity of the core network 10 and a User Equipment (UE) device, wherein the third messages are not modified by the interworking entity. The decision which message is treated as a third message on the one hand or as a first or second message on the other hand can be implemented by means of decision rules defined within the core network and/or stored within the interworking entity. Depending on the Session Initiation Protocol (SIP) request method, e.g. a Register request or a Invite request, a given message can be treated as a third message (i.e. no modification occurs) or as a first or second message (i.e. modification / replacement occurs).

In the Mobile Terminating case (Figure 2), the modification of the first message 1 occurs, e.g., at the sixth step (i.e. the corresponding non-modified first message 1 is sent from the User Equipment (UE) to the Proxy-Call State Control Function (P-CSCF) entity in the fifth step MT5 and the translation and forwarding to the Serving-Call State Control Function (S-CSCF) occurs in the sixth step MT6) and at the ninth step (i.e. the corresponding non-modified first message 1 is sent from the User Equipment (UE) to the Proxy-Call State Control Function (P-CSCF) entity in the eighth step MT8 and the translation and forwarding to the Serving-Call State Control Function (S-CSCF) occurs in the ninth step MT9).

In the Mobile Originating case (Figure 3), this modification of the first message 1 occurs, e.g., at the second step (i.e. the corresponding non-modified first message 1 is sent from the User Equipment (UE) to the Proxy-Call State Control Function (P-CSCF) entity in the first step MO1 and the translation and forwarding to the Serving-Call State Control Function (S-CSCF) occurs in the second step MO2) and at the eleventh step (i.e. the corresponding non-modified first message 1 is sent from the User Equipment (UE) to the Proxy-Call State Control Function (P-CSCF) entity in the tenth step MO10 and the translation and forwarding to the Serving-Call State Control Function (S-CSCF) occurs in the eleventh step MO11).

In the Mobile Terminating case (Figure 2), the modification of a second message 2 occurs, e.g., at the fourth step (i.e. the corresponding non-modified second message 2 is sent from Serving-Call State Control Function (S-CSCF) entity to the Proxy-Call State Control Function (P-CSCF) entity in the third step MT3 and the translation and forwarding to the User Equipment (UE) occurs in the fourth step MT4) and at the thirteenth step (i.e. the corresponding non-modified second message 2 is sent from Serving-Call State Control Function (S-CSCF) entity to the Proxy-Call State Control Function (P-CSCF) entity in the twelfth step MT12 and the translation and forwarding to the User Equipment (UE) occurs in the thirteenth step MT13).

In the Mobile Originating case (Figure 3), this modification of the second message 2 occurs, e.g., at the sixth step (i.e. the corresponding non-modified second message 2 is sent from Serving-Call State Control Function (S-CSCF) entity to the Proxy-Call State Control Function (P-CSCF) entity in the fifth step MO5 and the translation and forwarding to the User Equipment (UE) occurs in the sixth step MO6) and at the ninth step (i.e. the corresponding non-modified second message 2 is sent from Serving-Call State Control Function (S-CSCF) entity to the Proxy-Call State Control Function (P-CSCF) entity in the eighth step MO8 and the translation and forwarding to the User Equipment (UE) occurs in the ninth step MO9).

## Claims

1. Core Network (10) for supporting an Internet Protocol Multimedia Subsystem, IMS, enabled User Equipment, the User Equipment lacking Globally Routable User Agent URI, GRUU, support in an Internet Protocol Multimedia Subsystem, IMS, of a communication network, the Core Network (10) comprising an interworking entity (11),
- wherein the User Equipment is configured to send first Session Initiation Protocol, SIP, messages (1) to the interworking entity (11), the first messages (1) lacking a Globally Routable User Agent URI, GRUU,-related data, and the interworking entity (11) is configured to modify the first messages (1) by adding Globally Routable User Agent URI, GRUU,-related data,
- wherein the interworking entity (11) is configured to receive second Session Initiation Protocol, SIP, messages (2) to be sent to the User Equipment, the second messages (2) having a Globally Routable User Agent URI, GRUU,-related data, and the interworking entity (11) is configured to modify the second messages (2) by removing the Globally Routable User Agent URI, GRUU,-related data,
-- wherein the interworking entity (11) is:
-- a Proxy-Call State Control Function, P-CSCF, entity, or
-- a Serving-Call State Control Function, S-CSCF, entity, or
-- a Session Border Controller, SBC,
**characterized in that** the Globally Routable User Agent URI, GRUU,-related data comprises a public and a temporary Globally Routable User Agent URI, GRUU, wherein, in case the interworking entity (11) is the Proxy-Call State Control Function, P-CSCF, entity or the Session Border Controller, SBC, the Core Network (11) further comprises a Serving-Call State Control Function, S-CSCF, wherein the Serving-Call State Control Function, S-CSCF, entity is configured to generate a Session Initiation Protocol, SIP, message comprising a binding between
- a Globally Routable User Agent URI, GRUU,
- a public user id, SIP URI, and
- an International Mobile Subscriber Identity, IMSI.

2. Core Network (10) according to claim 1, wherein the User Equipment is both Internet Protocol Multimedia Subsystem, IMS, enabled and Global System of Mobile communication, GSM, enabled.

3. Method for supporting an Internet Protocol Multimedia Subsystem, IMS, enabled User Equipment, the User Equipment lacking Globally Routable User Agent URI, GRUU, support in an Internet Protocol Multimedia Subsystem, IMS, of a communication network, the communication network comprising an interworking entity (11), the method comprising the steps of:
- the User Equipment sending first Session Initiation Protocol, SIP, messages (1) to the interworking entity (11), the first messages (1) lacking a Globally Routable User Agent URI, GRUU,-related data, and the interworking entity (11) modifying the first messages (1) by adding Globally Routable User Agent URI, GRUU,-related data,
- and the interworking entity (11) receiving second Session Initiation Protocol, SIP, messages (2) to be sent to the User Equipment, the second messages (2) having a Globally Routable User Agent URI, GRUU-related data, and the interworking entity (11) modifying the second messages (2) by removing the Globally Routable User Agent URI, GRUU,-related data
-- wherein the interworking entity (11) is:
-- a Proxy-Call State Control Function, P-CSCF, entity, or
-- a Serving-Call State Control Function, S-CSCF, entity, or
-- a Session Border Controller, SBC,
**characterized in that** the Globally Routable User Agent URI, GRUU,-related data comprises a public and a temporary Globally Routable User Agent URI, GRUU, wherein, in case the interworking entity (11) is the Proxy-Call State Control Function, P-CSCF, entity or the Session Border Controller, SBC, the Core Network (11) further comprises a Serving-Call State Control Function, S-CSCF, wherein the Serving-Call State Control Function, S-CSCF, entity generates a Session Initiation Protocol, SIP, message comprising a binding between
- a Globally Routable User Agent URI, GRUU,
- a public user id, SIP URI, and
- an International Mobile Subscriber Identity, IMSI.

4. Method according to claim 3, wherein the User Equipment is both Internet Protocol Multimedia Subsystem, IMS, enabled and Global System of Mobile communication, GSM, enabled.

5. Interworking entity (11) providing a Call State Control Function for supporting an Internet Protocol Multimedia Subsystem, IMS, enabled User Equipment, the User Equipment lacking Globally Routable User Agent URI, GRUU, support in an Internet Protocol Multimedia Subsystem, IMS, of a communication network,
-- wherein the interworking entity (11) is:
-- a Proxy-Call State Control Function, P-CSCF, entity, or
-- a Serving-Call State Control Function, S-CSCF, entity, or
-- a Session Border Controller, SBC, wherein the inter working entity (11) is configurable to be the interworking entity (11) of a Core Network (10) according to claim 1.

6. Interworking entity (11) according to claim 5, wherein the User Equipment is both Internet Protocol Multimedia Subsystem, IMS, enabled and Global System of Mobile communication, GSM, enabled.

7. Program comprising a computer readable program code, wherein the computer readable program code, when executed on network entities of a core network (10) according to claim 1, causes the network entities to perform the steps of a method according to claim 3.

## Patentansprüche

1. Kernnetzwerk (10) zum Unterstützen einer Internet Protocol Multimedia Subsystem (IMS)-befähigten Nutzerausrüstung, wobei der Nutzerausrüstung Globally Routable User Agent URI (GRUU)-Support in einem Internet Protocol Multimedia Subsystem (IMS) eines Kommunikationsnetzes fehlt, wobei das Kernnetzwerk (10) eine Interworking-Entität (11) umfasst,
- wobei die Nutzerausrüstung dafür ausgestaltet ist, erste Session Initiation Protocol (SIP)-Meldungen (1) an die Interworking-Entität (11) zu senden, wobei den ersten Meldungen (1) Globally Routable User Agent URI (GRUU)-bezogene Daten fehlen und die Interworking-Entität (11) dafür ausgestaltet ist, die ersten Meldungen (1) durch Hinzufügen von Globally Routable User Agent URI (GRUU)-bezogenen Daten zu modifizieren,
- wobei die Interworking-Entität (11) dafür ausgestaltet ist, zweite Session Initiation Protocol (SIP)-Meldungen (2) zu empfangen, die an die Nutzerausrüstung gesendet werden sollen, wobei die zweiten Meldungen (2) Globally Routable User Agent URI (GRUU)-bezogene Daten haben, und die Interworking-Entität (11) dafür ausgestaltet ist, die zweiten Meldungen (2) durch Entfernen der Globally Routable User Agent URI (GRUU)-bezogene Daten zu modifizieren,
- wobei die Interworking-Entität (11) Folgendes ist:
• eine Proxy-Call State Control Function (P-CSCF)-Entität oder
• eine Serving-Call State Control Function (S-CSCF)-Entität oder
• ein Session Border Controller (SBC),
**dadurch gekennzeichnet, dass** die Globally Routable User Agent URI (GRUU)-bezogenen Daten einen öffentlichen und einen temporären Globally Routable User Agent URI (GRUU) umfassen, wobei für den Fall, dass die Interworking-Entität (11) die Proxy-Call State Control Function (P-CSCF)-Entität oder der Session Border Controller (SBC) ist, das Kernnetzwerk (11) des Weiteren eine Serving-Call State Control Function (S-CSCF) umfasst, wobei die Serving-Call State Control Function (S-CSCF)-Entität dafür ausgestaltet ist, eine Session Initiation Protocol (SIP)-Meldung zu generieren, die eine Bindung umfasst zwischen
- einem Globally Routable User Agent URI (GRUU),
- einer öffentlichen Nutzer-ID (SIP-URI) und
- einer International Mobile Subscriber Identity (IMSI).

2. Kernnetzwerk (10) nach Anspruch 1, wobei die Nutzerausrüstung sowohl Internet Protocol Multimedia Subsystem (IMS)-befähigt als auch Global System of Mobile Communication (GSM)-befähigt ist.

3. Verfahren zum Unterstützen einer Internet Protocol Multimedia Subsystem (IMS)-befähigten Nutzerausrüstung, wobei der Nutzerausrüstung ein Globally Routable User Agent URI (GRUU)-Support in einem Internet Protocol Multimedia Subsystem (IMS) eines Kommunikationsnetzes fehlt, wobei das Kommunikationsnetz eine Interworking-Entität (11) umfasst, wobei das Verfahren folgende Schritte umfasst:
- die Nutzerausrüstung sendet erste Session Initiation Protocol (SIP)-Meldungen (1) an die Interworking-Entität (11), wobei den ersten Meldungen (1) Globally Routable User Agent URI (GRUU)-bezogene Daten fehlen, und die Interworking-Entität (11) modifiziert die ersten Meldungen (1) durch Hinzufügen von Globally Routable User Agent URI (GRUU)-bezogenen Daten,
- und die Interworking-Entität (11) empfängt zweite Session Initiation Protocol (SIP)-Meldungen (2), die an die Nutzerausrüstung gesendet werden sollen, wobei die zweiten Meldungen (2) Globally Routable Nutzer Agent URI (GRUU)-bezogene Daten haben und die Interworking-Entität (11) die zweiten Meldungen (2) durch Entfernen der Globally Routable User Agent URI (GRUU)-bezogenen Daten modifiziert,
- wobei die Interworking-Entität (11) Folgendes ist:
• eine Proxy-Call State Control Function (P-CSCF)-Entität oder
• eine Serving-Call State Control Function (S-CSCF)-Entität oder
• ein Session Border Controller (SBC),
**dadurch gekennzeichnet, dass** die Globally Routable User Agent URI (GRUU)-bezogenen Daten einen öffentlichen und einen temporären Globally Routable User Agent URI (GRUU) umfassen, wobei für den Fall, dass die Interworking-Entität (11) die Proxy-Call State Control Function (P-CSCF)-Entität oder der Session Border Controller (SBC) ist, das Kernnetzwerk (11) des Weiteren eine Serving-Call State Control Function (S-CSCF) umfasst, wobei die Serving-Call State Control Function (S-CSCF)-Entität eine Session Initiation Protocol (SIP)-Meldung generiert, die eine Bindung umfasst zwischen:
- einem Globally Routable User Agent URI (GRUU),
- einer öffentlichen Nutzer-ID (SIP-URI), und
- einer International Mobile Subscriber Identity (IMSI).

4. Verfahren nach Anspruch 3, wobei die Nutzerausrüstung sowohl Internet Protocol Multimedia Subsystem (IMS)-befähigt als auch Global System of Mobile Communication (GSM)-befähigt ist.

5. Interworking-Entität (11), die eine Call State Control Function zum Unterstützen einer Internet Protocol Multimedia Subsystem (IMS)-befähigten Nutzerausrüstung bereitstellt, wobei der Nutzerausrüstung ein Globally Routable User Agent URI (GRUU)-Support in einem Internet Protocol Multimedia Subsystem (IMS) eines Kommunikationsnetzes fehlt,
- wobei die Interworking-Entität (11) Folgendes ist:
• eine Proxy-Call State Control Function (P-CSCF)-Entität, oder
• eine Serving-Call State Control Function (S-CSCF)-Entität, oder
• ein Session Border Controller (SBC),
- wobei die Interworking-Entität (11) dafür ausgestaltet werden kann, die Interworking-Entität (11) eines Kernnetzwerks (10) nach Anspruch 1 zu sein.

6. Interworking-Entität (11) nach Anspruch 5, wobei die Nutzerausrüstung sowohl Internet Protocol Multimedia Subsystem (IMS)-befähigt als auch Global System of Mobile Communication (GSM)-befähigt ist.

7. Programm, das einen computerlesbaren Programmcode umfasst, wobei der computerlesbare Programmcode, wenn er auf Netzwerkentitäten eines Kernnetzwerks (10) nach Anspruch 1 ausgeführt wird, die Netzwerkentitäten veranlasst, die Schritte eines Verfahren nach Anspruch 3 auszuführen.

## Revendications

1. Réseau central (10) pour prendre en charge un équipement utilisateur compatible sous-système multimédia à Protocole Internet, IMS, l'équipement utilisateur étant dépourvu d'un support d'URI d'agent utilisateur globalement routable, GRUU, dans un sous-système multimédia à Protocole Internet, IMS, d'un réseau de communication, le réseau central (10) comprenant une entité d'interfonctionnement (11),
- dans lequel l'équipement d'utilisateur est configuré pour envoyer de premiers messages de protocole d'initiation de session, SIP, (1) à l'entité d'interfonctionnement (11), les premiers messages (1) ne contenant pas de données liées à un URI d'agent utilisateur globalement routable, GRUU, et l'entité d'interfonctionnement (11) est configurée pour modifier les premiers messages (1) en ajoutant des données liées à un URI d'agent utilisateur globalement routable, GRUU,
- dans lequel l'entité d'interfonctionnement (11) est configurée pour recevoir de seconds messages de protocole d'initiation de session, SIP, (2) à envoyer à l'équipement d'utilisateur, les seconds messages (2) ayant des données liées à un URI d'agent utilisateur globalement routable, GRUU, et l'entité d'interfonctionnement (11) est configurée pour modifier les seconds messages (2) en supprimant les données liées à l'URI d'agent utilisateur globalement routable, GRUU,
- dans lequel l'entité d'interfonctionnement (11) est :
• une entité de fonction proxy de commande d'état d'appel, P-CSCF, ou
• une entité serveuse de commande d'état d'appel, S-CSCF, ou
• un contrôleur de session en limite, SBC,
**caractérisé en ce que** les données liées à l'URI d'agent utilisateur globalement routable, GRUU, comprennent un URI d'agent utilisateur routable globalement, GRUU, public et un URI d'agent utilisateur routable globalement, GRUU, temporaire, dans lequel, si l'entité d'interfonctionnement (11) est l'entité de fonction proxy de commande d'état d'appel, P-CSCF, ou le contrôleur de session en limite, SBC, le réseau central (11) comprend en outre une fonction serveuse de commande d'état d'appel, S-CSCF, dans lequel l'entité de fonction serveuse de commande d'état d'appel, S-CSCF, est configurée pour générer un message de protocole d'initiation de session, SIP, comprenant une liaison entre
- un URI d'agent utilisateur globalement routable, GRUU,
- un URI d'identificateur d'utilisateur public, SIP, et
- une identité internationale d'abonné mobile, IMSI.

2. Réseau central (10) selon la revendication 1, dans lequel l'équipement d'utilisateur est à la fois compatible sous-système multimédia à Protocole Internet, IMS, et compatible système global de communication mobile, GSM.

3. Réseau central (10) pour prendre en charge un équipement utilisateur compatible sous-système multimédia à Protocole Internet, IMS, l'équipement utilisateur étant dépourvu d'un support URI d'agent utilisateur routable globalement, GRUU, dans un système multimédia de protocole Internet, IMS, d'un réseau de communication (10), le réseau de communication comprenant une entité d'interfonctionnement (11), le procédé comprenant les étapes suivantes :
- l'équipement d'utilisateur envoie de premiers messages de protocole d'initiation de session, SIP, (1) à l'entité d'interfonctionnement (11), les premiers messages (1) ne contenant pas de données liées à un URI d'agent utilisateur globalement routable, GRUU, et l'entité d'interfonctionnement (11) modifiant les premiers messages (1) en ajoutant des données liées à un URI d'agent utilisateur globalement routable, GRUU,
- et l'entité d'interfonctionnement (11) reçoit de seconds messages de protocole d'initiation de session, SIP, (2) à envoyer à l'équipement utilisateur, les seconds messages (2) ayant un des données liées à un URI d'agent utilisateur globalement routable, GRUU, et l'entité d'interfonctionnement (11) modifiant les seconds messages (2) en supprimant les données liées à l'URI d'agent utilisateur globalement routable, GRUU,
• dans lequel l'entité d'interfonctionnement (11) est :
• une entité de fonction proxy de commande d'état d'appel, P-CSCF, ou
• une entité de fonction serveuse de commande d'état d'appel, S-CSCF, ou
- un contrôleur de session en limite, SBC,
**caractérisé en ce que** les données relatives à l'URI d'agent utilisateur globalement routable, GRUU, comprennent un URI d'agent utilisateur routable globalement, GRUU, public et un URI d'agent utilisateur routable globalement, GRUU, temporaire, dans lequel, si l'entité d'interfonctionnement (11) est l'entité de fonction proxy de commande d'état d'appel, P-CSCF, ou le contrôleur de session en limite, SBC, le réseau central (11) comprend en outre une fonction de commande d'état d'appel de service, S-CSCF, dans lequel l'entité de fonction serveuse de commande d'état d'appel, S-CSCF, génère un message de protocole d'initiation de session, SIP, comprenant une liaison entre
• un URI d'agent utilisateur globalement routable, GRUU,
• un URI d'identificateur d'utilisateur public, SIP, et
• une identité internationale d'abonné mobile, IMSI.

4. Procédé selon la revendication 3, dans lequel l'équipement d'utilisateur est à la fois un compatible sous-système multimédia à Protocole Internet, IMS, et compatible système global de communication mobile, GSM.

5. Entité d'interfonctionnement (11) fournissant une fonction de commande d'état d'appel pour prendre en charge un équipement utilisateur compatible sous-système multimédia à Protocole Internet, IMS, l'équipement utilisateur étant dépourvu d'un support d'URI d'agent utilisateur globalement routable, GRUU, dans un sous-système multimédia à Protocole Internet, IMS, d'un réseau de communication,
- dans lequel l'entité d'interfonctionnement (11) est :
• une entité de fonction proxy de commande d'état d'appel, P-CSCF, ou
• une entité de fonction serveuse de commande d'état d'appel, S-CSCF, ou
• un contrôleur de session en limite, SBC, dans lequel l'entité d'interfonctionnement (11) peut être configurée pour être l'entité d'interfonctionnement (11) d'un réseau central (10) selon la revendication 1.

6. Entité d'interfonctionnement (11) selon la revendication 5, dans lequel l'équipement d'utilisateur est à la fois compatible sous-système multimédia à Protocole Internet, IMS, et compatible système global de communication mobile, GSM.

7. Programme comprenant un code de programme lisible par ordinateur, dans lequel le code de programme lisible par ordinateur, lorsqu'il est exécuté sur des entités de réseau d'un réseau central (10) selon la revendication 1, amène les entités de réseau à exécuter les étapes d'un procédé selon la revendication 3.
